# EUROPEAN PATENT APPLICATION

(11) **EP 2 469 901 A2**
(43) Date of publication of application: **27.06.2012**
(21) Application number: 11194606.7
(22) Date of filing: 20.12.2011
(51) Int. Cl.: H04W 12/04, H04W 12/02

(54) **Efficient NEMO security with identity based encryption**

(30) Priority: 22.12.2010 MY 2010006130
(71) Applicant: Intel Corporation, Santa Clara, CA 95052 (US)
(72) Inventor: Tan, Tat Kin, Balik Pulau 07 MY 1100 (MY)
(74) Representative: Hutchinson, Glenn Stanley

(57) **Abstract**

An apparatus, method and system are provided to use identity based encryption (IBE) in Mobile IP and/or Network Mobility (NEMO) compliant communication networks to secure communications between various entities of the communication networks, as selected entities and their associated apparatus/system roam among the communication networks. Other embodiments may be disclosed or claimed.

## Description

### RELATED APPLICATION

This Application is related to, and claims priority to Malaysian Patent Application Number PI 2010006130, filed December 22, 2010, entitled "EFFICIENT NEMO SECURITY WITH IBE."

### TECHNICAL FIELD

The present disclosure generally relates to mobile computer networks, in particular, with respect to providing an efficient security scheme to Network Mobility (NEMO).

### BACKGROUND

Mobile IP may allow location-independent routing of Internet Protocol (IP) datagrams (or packets). Mobile IP may be used in both IPv4 and IPv6 networks. Mobile IP for IPv4 networks is described in Internet Engineering Task Force (IETF) Request for Comments (RFC) 3344, and updates are added in IETF RFC 4721, and Mobile IP for IPv6 networks (Mobile IPv6 for short) is described in IETF RFC 3775.

In Mobile IP, a mobile node may be associated with a home agent (HA) while in its home network, and may be assigned a home address. A HA may store information about mobile nodes whose home addresses are in the HA's network. When roamed away from its home network, a mobile node may be associated with a foreign agent (FA), and be assigned a care of address (CoA) that identifies its current location in a foreign network. Even though a mobile node may be associated with both a home address and a CoA, the mobile node may be identified by its home address regardless of its current location in the Internet.

Network Mobility (NEMO) is an extension of the Mobile IP protocol. The Network Mobility Basic Support Protocol is published in RFC 3963 by the IETF Network Mobility Working Group. NEMO is designed to support mobility for an entire mobile network, i.e., a mobile network that moves and attaches to different points in the Internet. NEMO may allow session continuity for every node in the mobile network as the network moves.

NEMO proposes using Internet Protocol Security (IPSec) and Security Associations (SA) for security purpose. However, IPSec and SA may introduce processing overhead to NEMO based networks, including processing overhead related to authentication, return routeability (RR), protocol encapsulation etc., which may have a negative impact on the efficiency of the NEMO security structure design.

### BRIEF DESCRIPTION OF THE DRAWINGS

Embodiments of the present disclosure will be described by way of exemplary illustrations, but not limitations, shown in the accompanying drawings in which like references denote similar elements, and in which:
FIG. 1 illustrates an example device suitable for communication based on NEMO and IBE in accordance with various embodiments of the present disclosure;
FIG. 2 illustrates an example communication system based on NEMO and IBE in accordance with various embodiments of the present disclosure;
FIG. 3 is a flow diagram illustrating a portion of an example operation of using IBE in NEMO, in accordance with various embodiments of the present disclosure;
FIG. 4 illustrates an example computer system suitable for use to practice various embodiments of the present disclosure.

### DETAILED DESCRIPTION OF ILLUSTRATIVE EMBODIMENTS

In the following detailed description, reference is made to the accompanying drawings which form a part hereof, and in which are shown by way of illustration embodiments in which the present disclosure may be practiced. It is to be understood that other embodiments may be utilized and structural or logical changes may be made without departing from the scope of the present disclosure. Therefore, the following detailed description is not to be taken in a limiting sense, and the scope of embodiments in accordance with the present disclosure is defined by the appended claims and their equivalents.

Various operations may be described as multiple discrete operations in turn, in a manner that may be helpful in understanding embodiments of the present disclosure; however, the order of description should not be construed to imply that these operations are order dependent.

The terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

For the purposes of the description, a phrase in the form "A/B" or in the form "A and/or B" means (A), (B), or (A and B). For the purposes of the description, a phrase in the form "at least one of A, B, and C" means (A), (B), (C), (A and B), (A and C), (B and C), or (A, B and C). For the purposes of the description, a phrase in the form "(A)B" means (B) or (AB) that is, A is an optional element.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

NEMO proposes using Internet Protocol Security (IPSec) and Security Associations (SA) for security purposes. Based on NEMO, an entire sub-network, including a mobile node of that sub-network, may roam from its home network to a foreign network, and attach to that foreign network. According to NEMO/Mobile IP, the mobile node may be provided with a CoA. The mobile node may send the CoA, via one or more binding updates, to its HA in the home network to inform the HA of its current location. Thereafter, an end-to-end IPSec Encapsulated Security Payload (ESP) protected bi-directional tunnel may be setup between the home network and the foreign network. However, since the mobile node is still associated with a home address within its home network, a correspondent node may continue communicating to the mobile node by sending packets to the mobile node's home address. The packets may be received by the HA of the mobile node in its home network, and forwarded to the mobile node in the foreign network via the IPSec tunnel. In particular, the HA may construct an outer layer of IP header using the entrance and exit point of the IPSec tunnel as the source and destination address.

If, however, the sub-network, including the mobile node, roams to another network via one or more additional hops, a separate IPSec tunnel may be setup between each of these networks along the way. Thereafter, packets from the correspondent node may travel through many IPSec tunnels before they reach the mobile node. If a Mobile node that is attached to an access router (AR) that is close to the edge of a network may be considered as the top level tree node, then the path to the mobile node after roaming *n* times may need to go an *n*-th level deeper down the tree. The HA and/or the network may be overloaded as the mobile node gets further away and have *n*-depth of branches of routes, thereby increasing the cost of routing, and reducing the scalability of the NEMO based networks.

Furthermore, when connecting to different Security Associations (SAs) between different tunnels using IPSec, the SAs may need to individually negotiate with each other the supported encryption association. As such, the SA mechanism used by IPSec may impose additional overhead to NEMO compliant networks. Accordingly, the overhead of using IPSec and SA as the method for providing security in NEMO may be burdensome to the mobility and reliability of the NEMO networks.

In various embodiments of the present disclosure, Identity Based Encryption (IBE) may be used to potentially reduce the overhead caused by excessive IPSec encapsulation. The basic concept of IBE is disclosed in RFC 5408 as published by the IETF.

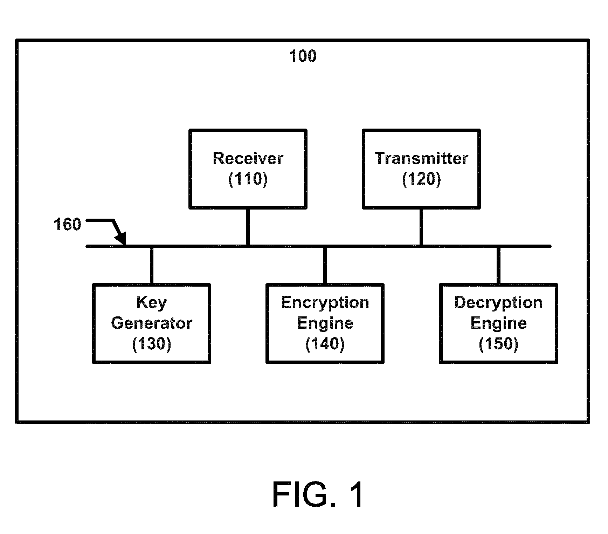

FIG. 1 illustrates an example device suitable for a communication network based on NEMO and IBE in accordance with various embodiments of the present disclosure. The device 100 may include a receiver 110, a transmitter 120, a key generator 130, an encryption engine 140, and a decryption engine 150, coupled to each other via a bus 160 as shown, and endowed with logic to practice the methods of the present disclosure, to be described further below. Although FIG. 1 lists distinct components, it is understood that one or more of these components may be integrated into a single component, or further subdivided. For example, the encryption engine 140 and the decryption engine 150 may be combined into a single cryptography engine. The device 100 may include other components not illustrated in FIG. 1, such as power supplies, antennas, memories, etc. In various embodiments, components 110 through 150 may be implemented in hardware, such as Application Specific Integrated Circuits (ASIC), Field Programmable Gate Arrays (FPGA), or software operating on generic processors (or processor cores), or a combination thereof. Furthermore, components 110 through 150 may be coupled to each other via other types of interconnects, such as, for example, point-to-point connections, etc.

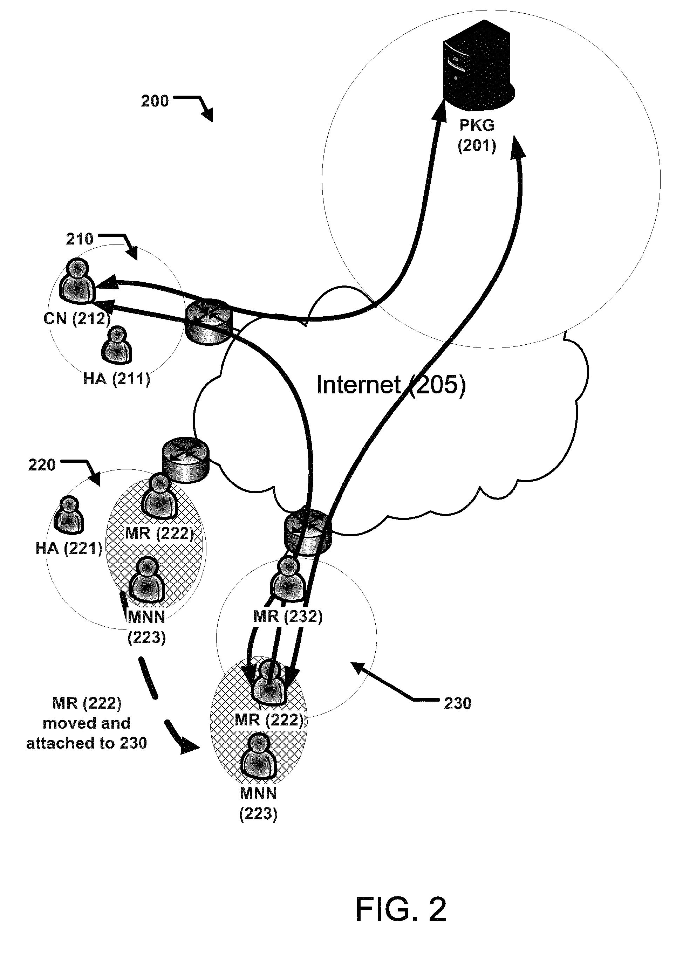

FIG. 2 illustrates an example wireless communication system based on NEMO and IBE in accordance with various embodiments of the present disclosure. As shown, a communication system 200 may include multiple NEMO compliant communication networks 210, 220, and 230, etc. The NEMO compliant communication networks 210 through 230 may be coupled to each other via one or more other networks 205. The one or more networks 205 may include networks of any size and topology, which may or may not be NEMO compliant, and may be one or more private and/or public networks, including the network cloud that is generally referred to as the Internet, or a mix thereof. The number of NEMO compliant communication networks in FIG. 2 is for purpose of illustration. Even though FIG. 2 illustrates 3 NEMO compliant communication networks, the communication system 200 may include more or less NEMO compliant communication networks.

In various embodiments, the communication network 210 may include a home agent (HA) 211 and a correspondent node (CN) 212. The communication network 220 may include a HA 221, a mobile router (MR) 222, and a mobile network node (MNN) 223. The MR 222, the MNN 223, and the CN 212 may be devices based on the device 100, incorporated with teachings of the present disclosure, as illustrated in FIG. 1.

The communication system 200 may further include a Private/Public Key Generator (PKG) server 201. In various embodiments, the PKG server 201 may hold a Master Public Key and a corresponding Master Private Key. The Master Public/Private keys may be statically created or dynamically generated. Upon receiving a request for the Master Public Key, the PKG server 201 may, after necessary authentication and authorization, publish the Master Public Key to the requestor and retain the Master Private Key. Similarly, upon receiving a request for the Master Private Key, the PKG server 201 may, after authentication and verification of authorization, publish the Master Private Key to the requestor and retain the Master Public Key. The PKG server 201 may be a dedicated service or integrated as part of another service, including a web service, that resides in the communicate system 200. The PKG server 201 may be implemented in either software or hardware, and may be centralized or distributed. In various embodiments, the authentication and verification of authorization by the PKG server 201 may be optional.

In various embodiments, entities of the communication system 200, including the CN 212, the MR 222, the MNN 223, the HA 211 and/or the HA 221 may communicate with the PKG server 201 to obtain either the Master Public Key or the Master Private Key, and may generate the necessary encryption/decryption key via the key generator 130.

In various embodiments, the MR 222 may act as a router for the MNN 223 and provide network access to the MNN 223. If the MNN 223 wishes to communicate with the CN 212, the MNN 223 may transmit packets that are designated for the CN 212 first to the MR 222. The MR 222 may receive packets from the MNN 223 via its receiver 110 and forward the packets to the CN 212 via its transmitter 120. The packets may traverse through one or more intermediate routers and HAs, before reaching the CN 212. In various embodiments, the MR 222 and the MNN 223 may roam from network 220 to network 230. The MR 222 may attach to a MR 232 of the network 230. The MNN 223 and the MR 222 may each be provided a CoA, by a FA (not shown) of the network 230.

In various embodiments, if the MR 222 and/or the MNN 223 want to communicate with the CN 212, the MR 222 and/or the MNN 223 may use the home address of the CN 212 as the identity of the CN 212. The MR 222 and/or the MNN 223 may determine whether it has a valid IBE compliant public key for the CN 212. If the MR 222 and/or the MNN 223 do not already have the IBE compliant public key for the CN 212, or if the existing IBE compliant public key is not valid, e.g., expired, the MR 222 and/or the MNN 223 may contact the PKG server 201 to request the Master Public Key (MPubK). The MR 222 and/or the MNN 223 may generate, via key generator 130, the unique IBE compliant public key for the CN 212. The IBE compliant public key for the CN 212 may be generated by various methods. In one embodiment, the key generator 130 of the MR 222 and/or the MNN 223 may generate the IBE compliant public key of the CN 212 by performing an XOR operation of the MPubK with the CN 212's identity, i.e., its home address. The MR 222 and/or the MNN 223 may then generate the ciphered text by encrypting the clear text message to be transmitted to the CN 212 with the IBE compliant public key of the CN 212, via the encryption engine 140. The MR 222 and/or the MNN 223 may then transmit the encrypted message to the CN 212, via the transmitter 120, in accordance with NEMO and Mobile IP.

In various embodiments, when the CN 212 receives the encrypted message, via its receiver 110, the CN 212 may first determine whether it has a valid IBE compliant private key. If the CN 212 does not already have an IBE compliant private key, or if the existing IBE compliant private key is not valid, e.g., expired, the CN 212 may contact the PKG server 201 to obtain a Master Private Key (MPrvK). The CN 212 may then generate its IBE compliant private key, via the key generator 130, for example, by performing an XOR operation of the MPrvK with the CN 212's home address. After obtaining its IBE compliant private key, the CN 212 may decrypt the message from the MNN 223, via the decryption engine 150, using the IBE compliant private key. As the messages are encrypted based on IBE, the messages may be transmitted without setting up tunnels and using costly encapsulations between the CN 212 and the MR 222 and/or the MNN 223, thereby improving the efficiency of communication.

In various embodiments, the method of producing the IBE compliant private key may not be the same as, or symmetrical to, the method of producing the IBE compliant public key, so long as the IBE compliant private key produced may successfully decrypt the message encoded by the IBE compliant public key.

In various embodiments, if the CN 212 wants to communicate with the MR 222 and/or the MNN 223, the CN 212 may likewise perform similar IBE encryption methods as described above. The CoA for the MNN 223 and the MR 222 may be used as an identity for the MNN 223 and the MR 222. For example, the CN 212 may calculate, via the key generator 130 of the CN 212, the IBE compliant public key by performing an XOR operation of the MPubK with the CoA of the MNN223 and/or the MR222. The CN 212 may then encrypt the message via its encryption engine 140 based on the generated public key. The CN 212 may transmit the encrypted message via the transmitter 120. Likewise, the MR 222 and/or the MNN 223 may receive the message via its receiver 110; calculate its IBE compliant private key, via key generator 130, by performing an XOR operation of the MPrvK with its own CoA; and use the private key to decrypt, via the decryption engine 150, the message from the CN 212.

In various embodiments, the calculation of IBE compliant public/private key and/or contacting the PKG server 201 may only need to take place if necessary. For example, calculation of the IBE compliant public/private key may only be carried out if either the CN 212 or the MR 222 obtained a new CoA, or if the IBE compliant public/private key expires. Furthermore, using IBE in NEMO, the Master Public/Private keys may not need to be distributed to all entities of the communication network 200 at once, as these keys may be provided on a just-in-time basis.

In various other embodiments, the CN 212 may use the home address of the MR 222, or the home address of the MNN 223, as its identity, regardless of their locations. The CN 212 may calculate the IBE compliant public key of the MR 222 or the MNN 223 by taking the MPubK and XOR with the home address of the MR 222 or the MNN 223. Since the home address of the MR 222 or the MNN 223 may remain the same regardless the actual location of the MR 222 and/or the MNN 223, this may eliminate the need for the CN 212 to be aware of the CoA of the MR 222 or the MNN 223, provide session continuity, and further simplify the communication process.

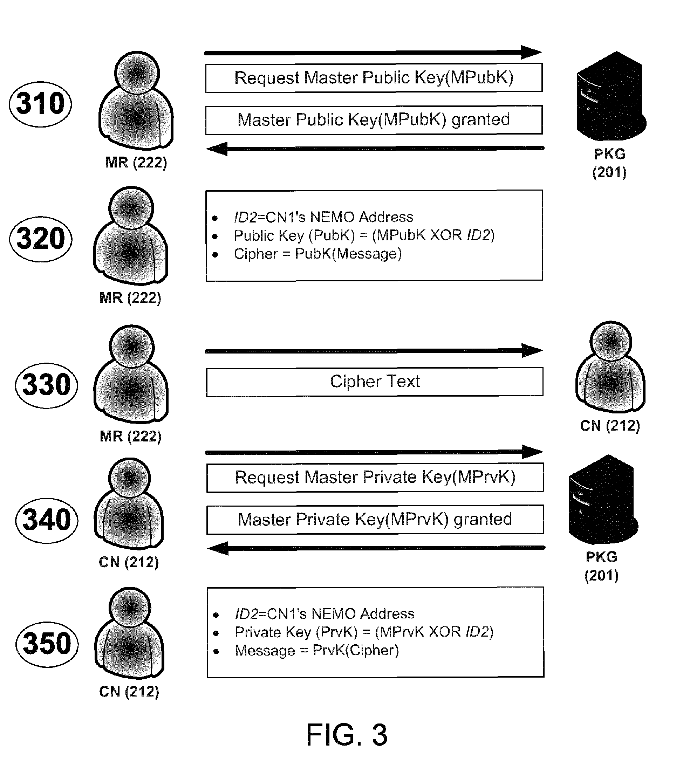

FIG. 3 is a flow diagram illustrating a portion of an example operation of using IBE in NEMO, in accordance with various embodiments of the present disclosure. Before transmitting to the CN 212, the MR 222 may determine that an IBE compliant encryption key for the CN 212 is needed. To generate the IBE compliant encryption key of the CN 212, the MR 222 may contact the PKG server 201 for the Master Public Key, and the PKG server 201 may grant the Master Public Key to the MR 222, in 310. The MR 222 may calculate, via the key generator 130, the IBE compliant encryption key for the CN 212 in 320, for example, by taking the Master Public key and performing an XOR operation with the home address of the CN 212. The MR 222 may transmit, via the transmitter 120, the ciphered text to the CN 212 in 330. The CN 212 may determine that an IBE compliant decryption key for the CN 212 is needed. After receiving the message, the CN 212 may contact the PKG server 201 for the Master Private Key, and the PKG server 201 may grant the Master Private Key to the CN 212, in 340. The CN 212 may then use the Master Private Key to generate, via its key generator 130, the IBE compliant encryption key of the CN 212, and decrypt the ciphered message, via the decryption engine 150, in 350. The CN 212 may generate the IBE compliant private key by, for example, performing an XOR operation between the Master Private Key and the CN 212's home address.

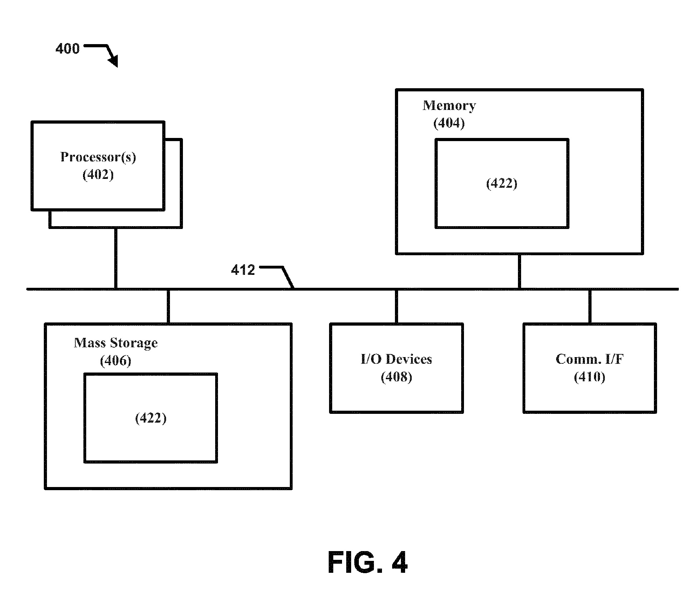

FIG. 4 illustrates an example computer system suitable for use to practice various embodiments of the present disclosure. As shown, computing system 400 may include a number of processors or processor cores 402, a system memory 404, and a communication interface 410. For the purpose of this application, including the claims, the terms "processor" and "processor cores" may be considered synonymous, unless the context clearly requires otherwise.

Additionally, computing system 400 may include tangible non-transitory mass storage devices 406 (such as an article of manufacture including diskette, hard drive, compact disc read only memory (CDROM) and so forth), input/output devices 408 (such as keyboard, cursor control and so forth). The elements may be coupled to each other via system bus 412, which represents one or more buses. In the case of multiple buses, they are bridged by one or more bus bridges (not shown).

Each of these elements may perform its conventional functions known in the art. In particular, system memory 404 and tangible non-transitory mass storage 406 may be employed to store a working copy and a permanent copy of the programming instructions, herein collectively denoted as 422, that implements one or more operating systems, drivers, applications practiced by various entities in a NEMO compliant communication network, including one or more of the mobile routers, the public/private key generator, the home agent, the foreign agent, etc.

The permanent copy of the programming instructions may be placed into permanent storage 406 in the factory, or in the field, through, for example, a distribution medium (not shown), such as a compact disc (CD), or through communication interface 410 (from a distribution server (not shown)). That is, one or more distribution media having an implementation of the agent program may be employed to distribute the agent and program various computing devices.

The remaining constitution of these elements 402-412 are known, and accordingly will not be further described.

Although specific embodiments have been illustrated and described herein, it will be appreciated by those of ordinary skill in the art that a wide variety of alternate and/or equivalent implementations may be substituted for the specific embodiments shown and described, without departing from the scope of the embodiments of the present disclosure. This application is intended to cover any adaptations or variations of the embodiments discussed herein. Therefore, it is manifestly intended that the embodiments of the present disclosure be limited only by the claims and the equivalents thereof.

## Claims

1. A method comprising:
receiving, by a mobile router (222), a message from a mobile network node (223) to be transmitted to a correspondent node (212) through a foreign communication network (205), wherein the mobile router (222) is configured to provide network access to the mobile network node (223), when the mobile router (222) and the mobile network node (223) are in a home communication network (220) or in a foreign communication network (205);
generating, by the mobile router (222), an encryption key based on an identity of the correspondent node (212);
encrypting, by the mobile router (222), the message based on the encryption key; and
transmitting, by the mobile router (222), the encrypted message to the correspondent node (212).

2. The method of claim 1, further comprising:
requesting from a key server (201), by the mobile router (222), a master public key based on said receiving of the message from the mobile network node (223); and receiving from the key server (201), by the mobile router (222), the master public key in response to said requesting;
wherein generating the encryption key comprises generating the encryption key based further on the master public key.

3. The method of claim 2, wherein generating the encryption key comprises performing an XOR operation with the master public key and the identity of the correspondent node (212).

4. The method of any one of claims 1-3, wherein the identity of the correspondent node (212) includes a home network address associated with the correspondent node (212).

5. The method of any one of claims 1-4, further comprising receiving, by the mobile router (222), a care of address (CoA) indicative of an association between the mobile router (222) and the foreign communication network (205), and providing, by the mobile router (222), the CoA to a home agent (221) of the mobile router (222).

6. The method of any one of claims 1-5, further comprising:
receiving from the correspondent node (212), by the mobile router (222), a second encrypted message;
generating, by the mobile router (222), a decryption key based on an identity of the mobile router (222) and a master private key;
decrypting, by the mobile router (222), the second encrypted message.

7. The method of claim 6, wherein the identity of the mobile router (222) includes a care of address of the mobile router (222) in the foreign communication network (205).

8. The method of claim 6, wherein the identity of the mobile router (222) includes a home address of the mobile router (222) in the home communication network (220).

9. An apparatus (100) comprising:
means (110) for receiving a first message from a correspondent node (212), wherein the apparatus (100) is configured to roam, with a mobile node (223), from a home network of the mobile node (223) to a foreign network (205) of the mobile node (223), and wherein the first message is encrypted using a first encryption key based on an identity of the mobile node (223);
means (130) for generating a decryption key based on the identity of the mobile node (223) and to generate a second encryption key based on an identity of the correspondent node (212);
means (150) for decrypting the first message based on the decryption key;
means (140) for encrypting a second message based on the second encryption key; and means (120) for transmitting the second message to the correspondent node (212).

10. The apparatus (100) of claim 9, wherein means (130) for generating comprises means for obtaining a master public key from a key server (201) based on the second message; and generating the second encryption key based on an XOR operation of the master public key and the identity of the correspondent node (212).

11. The apparatus (100) of any one of claims 9-10, wherein the identity of the correspondent node (212) is a network address of the correspondent node (212) in a home network of the correspondent node (212).

12. The apparatus (100) of any one of claims 9-11, wherein the home network and the foreign network (205) of the mobile node (223) are Network Mobility (NEMO) compliant communication networks.

13. The apparatus (100) of claim 12, wherein the means (110) for receiving is communicatively coupled to a mobile router (222) and an identity of the mobile router (222) includes a care of address of the mobile router (222) in the foreign network (205) of the mobile node (223).

14. The apparatus (100) of claim 13, wherein the identity of the mobile router (222) includes a home address of the mobile router (222) in the home network of the mobile node (223).
